# EUROPÄISCHE PATENTSCHRIFT

(11) **EP 3 268 310 B1**
(45) Veröffentlichungstag und Bekanntmachung des Hinweises auf die Patenterteilung: **06.03.2019**
(21) Anmeldenummer: 16708996.0
(22) Anmeldetag: 07.03.2016
(51) Int. Cl.: C08J 5/24, C08J 5/06, C01B 32/00, C01B 32/05, C08K 7/06, D06M 11/79, D06M 15/55, D06M 23/08, D01F 9/12, H01B 1/04, H01B 1/24

(54) **NANOPARTIKEL ENTHALTENDES FIBERSIZING VON KOHLEFASERN**
CARBON FIBRE FIBRE-SIZING CONTAINING NANOPARTICLES
PRODUIT D'ENCOLLAGE CONTENANT DES NANOPARTICULES POUR FIBRES DE CARBONE

(30) Priorität: 10.03.2015 EP 15158364
(43) Veröffentlichungstag der Anmeldung: 17.01.2018
(73) Patentinhaber: Evonik Degussa GmbH, 45128 Essen (DE)
(72) Erfinder: SPRENGER, Stephan, 22113 Oststeinbek (DE); NAUMANN, Matthias, 22159 Hamburg (DE)
(86) Internationale Anmeldenummer: PCT/EP2016/054732
(87) Internationale Veröffentlichungsnummer: WO 2016/142316

(56) Entgegenhaltungen:
- EP-A1- 1 634 921
- WO-A2-2007/130979
- DATABASE WPI Week 201529 Thomson Scientific, London, GB; AN 2015-25248P XP002743450, & CN 104 389 167 A (HARBIN INST TECHNOLOGY) 4. März 2015 (2015-03-04)

## Beschreibung

### Zusammenfassung:

Mit Nanopartikeln beschichtetes Kohlefasermaterial, deren Beschichtung zwischen 0,01 und weniger als 10 Gew.-% Nanopartikel bezogen auf das Trockengewicht des beschichteten Fasermaterials aufweist, wobei die Beschichtung weitere Reaktionen eingehen kann, ein Verfahren zur Herstellung der mit Nanopartikeln beschichteten Kohlefasermaterialien, sowie entsprechende Kohlefaserkompositmaterialien.

### Beschreibung der Erfindung:

Leichtbau ist eine der Schlüsseltechnologien zur Bewältigung der Herausforderungen des 21ten Jahrhunderts. Unabdingbar für Leichtbau ist der Einsatz von Faserverbundwerkstoffen. Ihre zunehmende Verwendung im Transportwesen, beispielsweise im Flugzeugbau, im Schienenfahrzeugbau oder im Automobilbau, im Maschinenbau oder im Bauwesen verlangt eine immer höhere Leistungsfähigkeit dieser Faserverbunde. Rotorblättern für Windkraftanlagen werden in zunehmender Länge produziert und unterliegen damit immer höheren Herausforderungen an die mechanische Stabilität.

Faserverbundwerkstoffe, vor allem für Hochleistungsanwendungen, werden häufig unter Verwendung von duromeren oder thermoplastischen Polymermatrices hergestellt. Diese Polymermatrices werden hinsichtlich ihrer Leistungsfähigkeit im Faserverbund optimiert. Auch die verwendeten Verstärkungsfasern, Kurz- oder Endlosfasern, sowie die daraus hergestellten textilen Gebilde, seien es Gewebe, Gewirke, Gelege oder Preforms, werden ebenfalls in Struktur und Auslegung hinsichtlich der Anwendung im Bauteil optimiert.

Das Versagen eines Faserverbundes ist hauptsächlich abhängig von der Grenzfläche Faser/Polymermatrix. Eine gute Anbindung der Faser an die duromere oder thermoplastische Polymermatrix sowie eine gute Faserbenetzung sind unerlässlich.

Grundsätzlich bestehen zwei Möglichkeiten dieses Problem durch Zugabe von Nanomaterialien zu lösen. Zum einen ist es möglich Nanomaterialien in die Polymermatrix einzuarbeiten und dafür relativ große Mengen zu verwenden, zum anderen könnten die Fasern mit Nanomaterialien beschichtet werden.

Dieses Problem wird durch Fibersizing (synonym auch Schlichte) während des Herstellungsprozesses der Faser gelöst. Die Aufgaben des Sizings sind zum einen der Schutz der Faser, d.h. sowohl der Einzelfilamente als auch des Faserbündels (Roving) während der weiteren Verarbeitungsschritte, als auch die spätere Anbindung der Faser an die duroplastische oder thermoplastische Polymermatrix. Auch weitere Fasereigenschaften, wie z.B. antistatisches Verhalten, können auch über das Sizing beeinflusst werden. Die Bestandteile des Sizings sind auf die Faserart, z.B. Glas- oder Kohlefaser, die Faserfeinheit und die vorgesehene spätere Anwendung, z.B. Verarbeitung in Epoxidharzen oder ungesättigten Polyesterharzen, abgestimmt.

Sprenger (J Mater Sci, 44 (2009) p342-5) offenbart Faserverbundmaterialien enthaltend Nanopartikel, die gleichmäßig im Polymer verteilt sind. Die mechanischen Eigenschaften werden dadurch auch mit einem Gehalt von 10 Gew.-% an Siliziumdioxidpartikeln in der Matrix nicht wesentlich beeinflusst gegenüber der Verwendung anderer Partikel.

Yang (Mat Letters 61 (2007) p3601-4) offenbart Kohlefasersizing mit SiO₂-Nanopartikeln und die positive Beeinflussung der interlaminaren Scherfestigkeit nach ASTM D-2344, es werden aber keine Mengenangaben offenbart, die einen Rückschluss auf den Partikelgehalt auf den Fasern erlauben. Eine Verbesserung anderer Laminateigenschaften wurde nicht beobachtet.

WO 2007/130979 A2, CN 104 389 167 A und EP 1 634 921 A1 offenbaren Kohlefasermaterialien, die mit Silika-Nanopartikeln beschichtet sind. Silika-Nanopartikel, die durch Oberflächenbehandlung hydrophobiert sind, werden nicht beschrieben.

Nachteil des Standes der Technik ist, dass relativ große Mengen an Nanomaterialien aufgewendet werden.

Aufgabe der vorliegenden Erfindung war es, die das Verfahren des Standes der Technik durch Verwendung geringerer Mengen an Nanomaterialien zu vereinfachen.

Überraschenderweise wurde gefunden, dass bereits geringe Mengen Nanomaterialien, die in der Schlichte vorhanden sind zu ausgezeichneter Verbesserung der mechanischen Eigenschaften der Kohlefaserverbundwerkstoffe führen.

Gegenstand der vorliegenden Erfindung ist mit Nanopartikeln beschichtetes Kohlefasermaterial wobei die Beschichtung zwischen 0,01 und weniger als 10 Gew.-% Nanopartikel bezogen auf das Trockengewicht des beschichteten Kohlefasermaterials aufweist und wobei die Beschichtung weitere Reaktionen eingehen kann, wobei die Nanopartikel oberflächenmodifizierte sphärische Silika-Nanopartikel sind, und wobei die SiO₂-Partikel durch Oberflächenbehandlung hydrophobiert sind.

Unter Nanopartikel werden im Umfang der Erfindung Partikel organischer oder anorganischer Natur verstanden, bevorzugt sind die Partikel anorganischer Natur, weiter bevorzugt sind die Partikel oxidischer und/oder hydroxidischer Natur, weiter mehr bevorzugt sind die Partikel nicht mineralischer Herkunft, besonders bevorzugt enthalten die Partikel Oxide und/oder Hydroxide des Aluminiums, Titans, Zinks, Zinns, Vanadiums, Cers, Eisens, Magnesium und Siliziums und mehr besonders bevorzugt sind die Partikel SiO₂ - Partikel. Die SiO₂ - Partikel sind bevorzugt ausgewählt aus Fällungskieselsäure, kolloidaler Kieselsäure, Diatomeenerde (Kieselgur) und pyrogener Kieselsäure, insbesondere bevorzugt kolloidale Kieselsäure.

Erfindungsgemäß sind die SiO₂-Partikel durch Oberflächenbehandlung hydrophobiert. Besonders bevorzugt sind die oberflächenmodifizierten Partikel, die in EP2067811 (US 2009/0149573) in den Absätzen 60 bis 65 offenbart sind, weiter besonders bevorzugt sind die SiO₂-Nanopartikel mit Alkyl- oder Aryl-alkoxysilanen oberflächenbehandelt.

Mehr bevorzugt sind die anorganischen Partikel oberflächenbehandelt. Bevorzugt ist die Oberflächenbehandlung mit Verbindungen ausgewählt aus Organosiliziumverbindungen wie Trialkylchlorsilan, Dialkyldichlorsilan, Alkylalkoxysilanen, Arylalkoxysilanen, Hexamethyldisilazan, (Meth-)Acryloxypropyltrialkoxysilanen, Aminopropyltrialkoxysilanen, Polydimethylsiloxanen, Polysiloxanen, Si-H-funktionellen Polysiloxanen, Carbonsäuren, Chelatbildnern und Fluoropolymeren sowie deren Mischungen durchgeführt

Die Nanopartikel sind bevorzugt sphärisch oder irregulär geformt, mehr bevorzugt sind die Nanopartikel sphärisch geformt.

Insbesondere bevorzugt ist mit Nanopartikeln beschichtetes Kohlefasermaterial, deren Beschichtung zwischen 0,01 und weniger als 10 Gew.-% Nanopartikel bezogen auf das Trockengewicht des beschichteten Kohlefasermaterials aufweist und dass die Beschichtung weitere Reaktionen eingehen kann, wobei die Nanopartikel oberflächenmodifizierte sphärische Silika-Nanopartikel sind.

Die Nanopartikel weisen bevorzugt einen mittleren Durchmesser von 1 bis 300 nm, weiter bevorzugt von 1 bis 200 nm, mehr bevorzugt von 2 bis 150 nm, weiter mehr bevorzugt von 3 bis 100 nm und insbesondere bevorzugt von 5 bis 50 nm auf.

Die Durchmesser der Nanopartikel vor Aufbringen auf die Kohlefaser werden bevorzugt mittels DLS (dynamic light scattering) bestimmt. Die Mittelwerte sind gemäß DLS gewichtsmittlere Werte. Die Durchmesser der Nanopartikel auf der Kohlefaser werden mittels elektronenmikroskopischer Aufnahmen bestimmt. Die Mittelwerte sind dann arithmetischer Art.

Weiterhin bevorzugt sind Mischungen von Nanopartikeln unterschiedlicher Natur, wobei die Mischungen mindestens SiO₂-Partikel aufweisen, bevorzugt weisen diese Mischungen zu mehr als 50 Gew.-% SiO₂-Partikel bezogen auf die Massensumme aller Nanopartikel auf, mehr bevorzugt mehr als 80 Gew.-%, weiter mehr bevorzugt mehr als 95 Gew.-% und insbesondere bevorzugt mehr als 99 Gew.-%.

Insbesondere bevorzugt sind SiO₂-Nanopartikel mit einem Durchmesser von 5 bis 50 nm, deren Oberfläche hydrophob modifiziert wurden, insbesondere mit Alkylalkoxysilanen und/oder Arylalkoxysilanen hydrophobiert wurden.

Kohlefasermaterialien sind bevorzugt Einzelfilamente, Faserbündel enthaltend Einzelfilamente, Fäden enthaltend Einzelfilamente oder Faserbündel. Weiterhin bevorzugt sine die Kohlefasermaterialien Produkte wie Gelege und Gewebe enthaltend Einzelfilamente, Faserbündel oder Fäden. Besonders bevorzugt sind Gelege enthaltend Faserbündel. Im Falle von Geweben sind diese bevorzugt Leinenwebart. Bevorzugte Gelege sind aufgebaut aus Schichten, wobei die Schichten in gleicher Richtung ausgerichtet sein können (uniaxial) oder in unterschiedlichen Richtungen ausgerichtet sein können (multiaxial).

Vorteil von Gelegen ist, dass die Fasern oder Faserbündel der Schichten nicht durch den Flechtvorgang gebogen sind. Damit steht eine höhere Kraftaufnahmekapazität zur Verfügung.

Insbesondere bevorzugt sind die Kohlefasermaterialien Gelege aus Kohlefasern.

Die Kohlefasermaterialien sind bevorzugt fabrizierte Rohprodukte, als gereinigte Materialien oder bereits beschichtet, bevorzugt werden gereinigte Kohlefasermaterialien verwendet. Die Reinigung erfolgt bevorzugt materialabhängig, ein bevorzugtes Reinigungsverfahren ist eine thermische Behandlung, besonders bevorzugt eine Bestrahlung mit Hilfe eines IR-Strahlers. Bevorzugt erfolgt die thermische Behandlung unter Schutzgas. Bevorzugt enthält das Schutzgas keinen Sauerstoff, bevorzugt enthält das Schutzgas weniger als 1 Vol.-%, mehr bevorzugt weniger 0,1 Vol.-%, insbesondere bevorzugt weniger als 50 ppm Sauerstoff.

Ein bevorzugter IR-Strahler weist eine Länge von 1 m auf. Das Kohlefasermaterial wird in einer Entfernung von 5 mm bis 10 cm, bevorzugt 1cm bis 3 cm am IR-Strahler vorbeigeführt. Die Bestrahlung führt zur Zersetzung von Verbindungen, die sich auf der Oberfläche des Kohlefasermaterials befinden. Der Vorgang wird so optimiert, dass auch nach erneuter Bestrahlung unter gleichen Bedingungen die Masse eines Probestückes oder mehrere identischer Probestücke um nicht mehr als 1 % des Messwertes abweicht.

Das erfindungsgemäße beschichtete Kohlefasermaterial wird bevorzugt in Form von Einzelfilamenten, Faserbündeln, Geweben oder Gelegen mit den Nanomaterialien beschichtet, mehr bevorzugt werden Faserbündel mit den Nanomaterialien beschichtet.

Bevorzugt weisen die erfindungsgemäßen Kohlefasermaterialen weniger als 9 Gew.-%, mehr bevorzugt weniger als 8, 7, 6, 5, 4, 3 und weniger als 2 Gew.-% bezogen auf das Trockengewicht der beschichteten an Nanomaterialien Faser auf.

Weiter mehr bevorzugt weisen die erfindungsgemäßen Kohlefasermaterialen 0,05 bis 1,6 Gew.-%, besonders bevorzugt 0,1 bis 1,2 Gew.-%, insbesondere bevorzugt 0,2 bis 1,0 Gew.-% bezogen auf das Trockengewicht der beschichteten an Nanomaterialien Faser auf.

Insbesondere bevorzugt sind die erfindungsgemäßen mit Nanopartikeln beschichteten Kohlefasermaterialien solche Faserbündel, die mit Alkylalkoxysilanen und/oder Arylalkoxysilanen oberflächenbehandelten sphärischen SiO₂-Nanopartikeln in einem Epoxidharz beschichtet wurden, wobei die beschichteten Faserbündel zwischen 0,1 und 2 Gew.-% Nanopartikel bezogen auf das Trockengewicht der beschichteten Faserbündel aufweist, und wobei die Beschichtung weitere Reaktionen eingehen kann.

Die weiteren Reaktionen der Beschichtung des Kohlefasermaterials sind Reaktionen, die es ermöglichen, mit einer Polymermatrix im Sinne von Vernetzungsreaktionen chemische Bindungen einzugehen. Die Polymermatrix und die erfindungsgemäßen mit Nanopartikeln beschichteten Kohlefasermaterialien können einen Kohlefaserverbundwerkstoff bilden, bei dem die Beschichtung der Kohlefasermaterialien an der Oberfläche der Beschichtung mit der Polymermatrix reagieren kann.

Bevorzugt handelt es sich bei diesen Reaktionen um ringöffnende Polymerisation von Epoxiden.

Ein weiterer Gegenstand ist Verfahren zur Herstellung von mit Nanopartikeln beschichtetem Kohlefasermaterial, deren Beschichtung zwischen 0,01 und weniger als 10 Gew.-% Nanopartikel bezogen auf das Trockengewicht des beschichteten Kohlefasermaterials aufweist und wobei das Kohlefasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Kohlefasermaterial nachfolgend getrocknet wird, wobei die wässrige Emulsion oberflächenmodifizierte sphärische Silika-Nanopartikel enthält, und wobei die SiO₂-Partikel durch Oberflächenbehandlung hydrophobiert sind.

Bevorzugt ist das erfindungsgemäße Verfahren zur Herstellung von mit Nanopartikeln beschichtetes Kohlefasermaterial, deren Beschichtung zwischen 0,01 und weniger als 10 Gew.-% Nanopartikel bezogen auf das Trockengewicht des beschichteten Kohlefasermaterials aufweist, wobei das Kohlefasermaterial mit einem Bad in Kontakt gebracht wird, wobei das Bad eine wässrige Emulsion eines Nanopartikel-haltigen Filmbildners enthält und wobei das beschichtete Kohlefasermaterial nachfolgend getrocknet wird.

Bevorzugt wird das Kohlefasermaterial nicht direkt in das Bad getaucht sondern mittels einer rotierenden Auftragswalze der Nanopartikel-haltige Filmbildner auf das Kohlefasermaterial aufgetragen. Bevorzugt taucht die Auftragswalze mit der Unterseite in das Bad ein, nimmt bei der Rotation eine gewisse Menge Filmbildner als Film auf, und auf der Oberseite der Walze wird das Kohlefasermaterial mit dem Nanopartikel-haltigen Filmbildner in Kontakt gebracht. Dabei ist die Auftragsmenge auf das Kohlefasermaterial abhängig von den Stoffeigenschaften der wässrigen Emulsion des Nanopartikel-haltigen Filmbildners, wie bevorzugt der Viskosität, und von der Rotationsgeschwindigkeit der Walze, von dem Durchmesser der Walze und von der Oberflächenbeschaffenheit der Walze. Die Geschwindigkeiten der Walze und des Kohlefasermaterials sind bevorzugt so aufeinander abgestimmt, dass keine Gleitreibung auftritt.

Der Filmbildner ist bevorzugt ein reaktives, vernetzbares Monomer oder Oligomer, insbesondere bevorzugt ein Epoxidharz.

Mehr bevorzugt ist das Verfahren zur Herstellung von mit Nanopartikeln beschichtetem Kohlefasermaterial, deren Beschichtung zwischen 0,01 und weniger als 10 Gew.-% Nanopartikel bezogen auf das Trockengewicht des beschichteten Kohlefasermaterial aufweist und wobei das Kohlefasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Kohlefasermaterial nachfolgend getrocknet wird, wobei die wässrige Emulsion oberflächenmodifizierte sphärische Silika-Nanopartikel enthält, wobei der Filmbildner ein Epoxidharz ist.

Bevorzugt enthält die wässrige Emulsion des Nanopartikel-haltigen Filmbildners weitere Komponenten, bevorzugt ausgewählt aus Viskositätsregulatoren, bevorzugt sind Carboxymethylzellusose und Hydroxyethylzellulose, Netzmittel und Dispergieradditive, und Emulgatoren.

Der Festkörpergehalt der wässrigen Emulsion berechnet sich aus der Summe aller Komponenten abzüglich des Wassers.

Bevorzugt enthält die wässrige Emulsion 1 bis 50 Gew.-% Nanopartikel bezogen auf den Feststoffgehalt der Emulsion, bevorzugt 5 bis 30 und insbesondere bevorzugt 10 bis 20 Gew.-%.

Besonders bevorzugt ist das Verfahren zur Herstellung von mit Nanopartikeln beschichtetem Kohlefasermaterial, deren Beschichtung zwischen 0,01 und weniger als 10 Gew.-% Nanopartikel bezogen auf das Trockengewicht des beschichteten Kohlefasermaterial aufweist und wobei das Kohlefasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Kohlefasermaterial nachfolgend getrocknet wird, wobei die wässrige Emulsion oberflächenmodifizierte sphärische Silika-Nanopartikel enthält, wobei der Filmbildner ein Epoxidharz ist, wobei die wässrige Emulsion 10 bis 20 Gew.-% Nanopartikel bezogen auf den Feststoffgehalt der Emulsion enthält.

Bevorzugt wird die Trocknung im erfindungsgemäßen Verfahren bei Temperaturen oberhalb der Raumtemperatur, bevorzugt von 30 bis 95°C, mehr bevorzugt von 35 bis 90°C, weiter bevorzugt von 40 bis 85°C, weiter mehr bevorzugt von 45 bis 80°C, besonders bevorzugt von 50 bis 75°C und insbesondere bevorzugt von 55 bis 70°C durchgeführt.

Bevorzugt wird die Trocknung innerhalb von 0,5 bis 10 Minuten, bevorzugt innerhalb von 1 bis 3 Minuten durchgeführt.

Bevorzugt wird die Trocknung mit Heißluft im Gegenstrom durchgeführt.

Insbesondere wird die Trocknung im erfindungsgemäßen Verfahren bei Temperaturen von 55 bis 70°C mit Heißluft im Gegenstrom innerhalb von 1 bis 3 min durchgeführt.

Der Beschichtungsvorgang und die Trocknung des erfindungsgemäßen Verfahrens können wiederholt durchgeführt werden.

Zur Bestimmung des Nanopartikelgehaltes wird zum Abschluss des erfindungsgemäßen Verfahrens das Kohlefasermaterial bevorzugt bis zur Gewichtskonstanz getrocknet. Diese Trocknung wird bevorzugt bei 55 bis 70°C durchgeführt, das Material wird nach Abkühlung auf Raumtemperatur gewogen und der Vorgang der Trocknung und Wägung wird solange wiederholt, bis mindestens zwei aufeinander folgende Wägungen eine Abweichung von weniger als 0,5% des Messwertes aufweisen.

Ein weiterer Gegenstand ist die Verwendung der erfindungsgemäßen mit Nanopartikeln beschichteten Kohlefasermaterialien und/oder der erfindungsgemäßen Verfahrensprodukte zur Herstellung von Kohlefaserverbundwerkstoffen.

Ein weiterer Gegenstand sind Kohlefaserverbundwerkstoffe enthaltend das erfindungsgemäße mit Nanopartikeln beschichtete Kohlefasermaterial und/oder das erfindungsgemäße Verfahrensprodukt in einer Polymermatrix.

Bevorzugt ist die Polymermatrix ein Duromer, bevorzugt Epoxydharz, ein Vinylesterharz oder ein ungesättigtes Polyesterharz, besonders bevorzugt ein Epoxydharz.

Ein Vorteil der erfindungsgemäßen mit Nanopartikeln beschichteten Kohlefasermaterialien ist, dass der Zusatz von Nanopartikeln zum Fiber Sizing nicht nur die Fasereigenschaften verbessert, sondern überrschenderweise darüber hinaus auch die Eigenschaften von daraus hergestellten Kohlefaserverbundwerkstoffen. Insbesondere werden die Bruchzähigkeit und das Ermüdungsverhalten bei zyklischer Beanspruchung verbessert. Gemäß dem Stand der Technik werden derartige Verbesserungen nur als Folge der Modifizierung der gesamten Harzmatrix mit Nanopartikeln gefunden.

Ein weiterer Vorteil ist, dass eine außerordentlich geringe Menge von Nanomaterialen in der Beschichtung von Kohlefasermaterialien bereits den gewünschten Effekt hervorruft und eine Steigerung der Masse an Nanomaterialien keine weitere Verbesserung der mechanischen Eigenschaften daraus hergestellter Kohlefaserverbundwerkstoffe bewirkt.

Ein weiterer Vorteil ist, dass Kohlefaserverbundwerkstoffe enthaltend Kohlefasermaterial mit einem über den von der vorliegenden Erfindung beanspruchten Bereich hinausgehenden Masse an Nanomaterialien schlechtere Eigenschaften aufweist, als die erfindungsgemäßen Kohlefaserverbundwerkstoffe.

Die Beispiele zeigen die vorteilhafte Verwendung der erfindungsgemäßen Kohlefasermaterialien.

Besonders wichtig für ein Laminat ist das Ermüdungsverhalten. Dies wird mittels eines zyklischen Dreipunktbiegeversuches untersucht. Dabei wird eine Platte des Kohlefaserverbundwerkstoffs zyklisch belastet und die zurückgegebene Energie gemessen. Daraus berechnet sich die im Laminat dissipierte Energie, welche zu Laminatschädigungen und schließlich zum Bruch führt. Je höher die dissipierte Energie, desto weniger Zyklen übersteht ein Laminat, d.h. desto kürzer ist seine Lebensdauer.

Die Beschichtung von Kohlefasermaterialien mit derartig geringen Mengen an Nanomaterialien stellt eine Verbesserung gegenüber dem Stand der Technik dar und vereinfacht das Beschichtungsverfahren.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

### Beispiele

### Materialien:

Nanopox® F 400 (Warenzeichen der Evonik Hanse GmbH, Deutschland) enthält zu 40 Gew.-% SiO₂-Partikel mit einer Durchmesser von 20 nm (Zahlenmittel) und wurde zunächst wässrig emulgiert. Diese Emulsion wurde anschließend auf die in den Beispielen angegebenen Werte verdünnt.

Neoxil 965 (DSM Composite Resins) wurde immer in Form einer 6 Gew.-% Emulsion in Wasser bezogen auf die Gesamtemulsion eingesetzt.

### Entschlichtung der Fasermaterialien:

In einem Abstand von 2 cm wird ein Kohlefaserbündel an einem IR-Strahler vorbeigeführt. Die Geschwindigkeit wurde so optimiert, dass das ursprüngliche Sizing vollständig entfernt wird. Dies wurde über den Masseverlust bestimmt.

### Allgemeines Beschichtungsverfahren:

Auf das Fasermaterial wird mittels einer rotierenden Auftragswalze der Filmbildner aufgetragen. Die Auftragswalze taucht mit der Unterseite in das Sizingbad ein, nimmt bei der Rotation eine gewisse Menge Filmbildner auf und auf der Oberseite der Walze wird das Fasermaterial mit dem Filmbildner in Kontakt gebracht. Die Geschwindigkeit der Walze und des Fasermaterials sind so aufeinander abgestimmt, dass keine Differenzgeschwindigkeit auftritt.

### Beispiel 1, Sizing auf entschlichteten Kohlefasem:

Das Kohlefasermaterial T700SC-24000 (Toray Carbon Fibres, Frankreich) wurde durch IR-Bestrahlung entschlichtet und nach Abkühlen auf Raumtemperatur gewogen. Direkt nachfolgend wurden die Faserbündel beschichtet. Das Tauchbad enthielt eine wässrige Emulsion von Epoxydharzfilmbildnern und gegebenenfalls SiO₂-Nanopartikel. Nach dem Tauchen wurden die Fasern bei 60°C bis zur Gewichtskonstanz getrocknet. Danach wurde durch Differenzwägung die Menge des aufgebrachten Sizings nachgeprüft.

Die Sizings wurden jeweils in einer Masse von 1,8 Gew.-% (bezogen auf die Massensumme der Fasern nach der Reinigung + aufgetragener Beschichtung) aufgetragen. Es wurden drei Sizings als untersucht.

Die Tauchbäder waren folgendermaßen zusammengesetzt:
1. Ausschließlich Neoxil 965
2. Mischung von 50 Gew.-% Neoxil 965 und 50 Gew.-% Nanopox F 400 (als 2 Gew.-% SiO₂ wässrige Emulsion)
3. Mischung von 50 Gew.-% Neoxil 965 und 50 Gew.-% Nanopox F 400 (als 4 Gew.-% SiO₂ wässrige Emulsion).
4. Mischung von 50 Gew.-% Neoxil 965 und 50 Gew.-% Nanopox F 400 (als 24 Gew.-% SiO₂ wässrige Emulsion)

Nach dem Konstantwiegen berechnen sich damit die Beschichtungen zu:
System 1: mit 1,8 Gew.-% Neoxil 965, nicht erfindungsgemäß
System 2: mit 1,35 Gew.-% Neoxil 965 und 0,45 Gew.-% Nanopox F 400, entsprechend 0,18 Gew.-% SiO₂
System 3: mit 1,08 Gew.-% Neoxil 965 und 0,72 Gew.-% Nanopox F 400, entsprechend 0,288 Gew.-% SiO₂
System 4: mit 0,36 Gew.-% Neoxil 965 und 1,44 Gew% Nanopox F 400, entsprechend 0,576 Gew% SiO₂

Mit den beschichteten Fasermaterialien wurden jetzt Probekörper als UD-Materialien gewickelt. Diese wurden anschließend mit dem Epoxidharz/härter-Gemisch getränkt und gemäß den Angaben des Herstellers ausgehärtet. Zum Einsatz kam das Epoxidharz Infusion Resin MGS®RIM 135 (Warenzeichen der Hexion, Deutschland) in Kombination mit dem Härter RIMH 137 (Hexion) verwendet. Als Imprägnierverfahren wurde VARI (Vacuum Assisted Resin Infusion) gewählt. Die so hergestellten Laminate wurden auf ihre mechanischen Eigenschaften geprüft.

Die Bruchzähigkeit (G_{lc}) wurde nach DIN EN ISO 15024:2001 mit folgenden Parametern gemessen: 65 mm "delamination strength".

Die Querzugfestigkeit wurde nach DIN EN ISO 527-5:2008 bestimmt.

Die dissipierte Energie wurde nach DIN EN ISO 13003:2003 im Dreipunktbiegeversuch nach 3000 Zyklen bestimmt.

Die interlaminare Scherfestigkeit (ILSS) wurde nach ASTM-D 2344 bestimmt.

Das Biegemodul wurde nach DIN EN ISO 14125:1998 bestimmt

**Tabelle 1: Mechanische Eigenschaften der Laminate gemäß Beispiel 1**

| Test | System 1 | System 2 | System 3 | System 4 |
|---|---|---|---|---|
| ILLS in Faserrichtung | 37 MPa | 59 MPa | 53 MPa | 50 MPa |
| Bruchzähigkeit G_{lc} | 310 J/m² | 535 J/m² | 685 J/m² | n. b. |
| Biegemodul | 103816 MPa | 89775 MPa | 90589 MPa | 86674 MPa |

Die Ergebnisse zeigen die vorteilhafte Verwendung der erfindungsgemäßen Kohlefasermaterialien.

## Patentansprüche

1. Mit Nanopartikeln beschichtetes Kohlefasermaterial, wobei die Beschichtung zwischen 0,01 und weniger als 10 Gew.-% Nanopartikel bezogen auf das Trockengewicht des beschichteten Kohlefasermaterials aufweist und wobei die Beschichtung weitere Reaktionen eingehen kann, wobei die Nanopartikel oberflächenmodifizierte sphärische Silika-Nanopartikel sind, und wobei die SiO₂-Partikel durch Oberflächenbehandlung hydrophobiert sind.

2. Kohlefasermaterial nach Anspruch 1 **dadurch gekennzeichnet, dass** die Beschichtung vernetzbare Epoxydgruppen enthält.

3. Kohlefasermaterial nach einem der Ansprüche 1 bis 2 **dadurch gekennzeichnet, dass** die Beschichtung ein Epoxydharz enthält.

4. Verfahren zur Herstellung von mit Nanopartikeln beschichtetem Kohlefasermaterial, wobei die Beschichtung zwischen 0,01 und weniger als 10 Gew.-% Nanopartikel bezogen auf das Trockengewicht des beschichteten Kohlefasermaterial aufweist und wobei das Kohlefasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Kohlefasermaterial nachfolgend getrocknet wird, wobei die wässrige Emulsion oberflächenmodifizierte sphärische Silika-Nanopartikel enthält, und wobei die SiO₂-Partikel durch Oberflächenbehandlung hydrophobiert sind.

5. Verfahren nach Anspruch 4 **dadurch gekennzeichnet, dass** das Kohlefasermaterial nicht direkt in das Bad getaucht, sondern mittels einer rotierenden Auftragswalze der Nanopartikel-haltige Filmbildner auf das Kohlefasermaterial aufgetragen wird.

6. Verfahren nach einem der Ansprüche 4 oder 5 **dadurch gekennzeichnet, dass** die wässrige Emulsion 1 bis 50 Gew.-% Nanopartikel bezogen auf den Feststoffgehalt der Emulsion enthält.

7. Verwendung des mit Nanopartikeln beschichteten Kohlefasermaterial nach einem der Ansprüche 1 bis 3, vorzugsweise hergestellt durch ein Verfahren nach einem der Ansprüche 4 bis 6, zur Herstellung von Kohlefaserverbundwerkstoffen.

8. Kohlefaserverbundwerkstoff enthaltend das mit Nanopartikeln beschichtete Kohlefasermaterial nach einem der Ansprüche 1 bis 3, vorzugsweise hergestellt durch ein Verfahren nach einem der Ansprüche 4 bis 7, in einer Polymermatrix.

9. Kohlefaserverbundwerkstoff nach Anspruch 8 **dadurch gekennzeichnet, dass** die Polymermatrix ein Duromer ist.

10. Kohlefaserverbundwerkstoff nach einem der Ansprüche 8 oder 9 **dadurch gekennzeichnet, dass** das Duromer ein Epoydharz ist.

## Claims

1. Carbon fibre material coated with nanoparticles, where said coating comprises from 0.01 to less than 10% by weight of nanoparticles, based on the dry weight of the coated carbon fibre material, where the coating can become involved in further reactions and the nanoparticles are surface-modified spherical silica nanoparticles, and the SiO₂ particles have been hydrophobized by surface treatment.

2. Carbon fibre material according to Claim 1, **characterized in that** the coating comprises crosslinkable epoxy groups.

3. Carbon fibre material according to Claim 1 or 2, **characterized in that** the coating comprises an epoxy resin.

4. Process for the production of carbon fibre material coated with nanoparticles, where said coating comprises from 0.01 to less than 10% by weight of nanoparticles, based on the dry weight of the coated carbon fibre material, and where the carbon fibre material is brought into contact, by immersion or spraying, or with the aid of a bath, with an aqueous emulsion comprising a nanoparticle-containing film-former, and where the coated carbon fibre material is subsequently dried, where the aqueous emulsion comprises surface-modified spherical silica nanoparticles, and the SiO₂ particles have been hydrophobized by surface treatment.

5. Process according to Claim 4, **characterized in that** the carbon fibre material is not directly immersed in the bath, and **in that** instead the nanoparticle-containing film-former is applied to the carbon fibre material by means of a rotating applicator roll.

6. Process according to Claim 4 or 5, **characterized in that** the aqueous emulsion comprises from 1 to 50% by weight of nanoparticles, based on the solids content of the emulsion.

7. Use of the carbon fibre material coated with nanoparticles according to any of Claims 1 to 3 preferably produced by a process according to any of Claims 4 to 6 for the production of carbon fibre composite materials.

8. Carbon fibre composite material comprising the carbon fibre material coated with nanoparticles according to any of Claims 1 to 3, preferably produced by a process according to any of Claims 4 to 7 in a polymer matrix.

9. Carbon fibre composite material according to Claim 8, **characterized in that** the polymer matrix is a thermoset.

10. Carbon fibre composite material according to Claim 8 or 9, **characterized in that** the thermoset is an epoxy resin.

## Revendications

1. Matériau à base de fibres de carbone revêtu avec des nanoparticules, le revêtement comprenant entre 0,01 et moins de 10 % en poids de nanoparticules par rapport au poids sec du matériau à base de fibres de carbone revêtu, et le revêtement pouvant subir des réactions supplémentaires, les nanoparticules étant des nanoparticules de silice sphériques modifiées en surface, et les particules de SiO₂ étant hydrophobées par traitement de surface.

2. Matériau à base de fibres de carbone selon la revendication 1, **caractérisé en ce que** le revêtement contient des groupes époxyde réticulables.

3. Matériau à base de fibres de carbone selon l'une quelconque des revendications 1 à 2, **caractérisé en ce que** le revêtement contient une résine époxyde.

4. Procédé de fabrication d'un matériau à base de fibres de carbone revêtu avec des nanoparticules, le revêtement comprenant entre 0,01 et moins de 10 % en poids de nanoparticules par rapport au poids sec du matériau à base de fibres de carbone revêtu, et le matériau à base de fibres de carbone étant mis en contact par immersion, pulvérisation ou à l'aide d'un bain avec une émulsion aqueuse contenant un agent filmogène contenant des nanoparticules, puis le matériau à base de fibres de carbone revêtu étant séché, l'émulsion aqueuse contenant des nanoparticules de silice sphériques modifiées en surface, et les particules de SiO₂ étant hydrophobées par traitement de surface.

5. Procédé selon la revendication 4, **caractérisé en ce que** le matériau à base de fibres de carbone n'est pas immergé directement dans le bain, et l'agent filmogène contenant des nanoparticules est plutôt appliqué sur le matériau à base de fibres de carbone au moyen d'un cylindre d'application rotatif.

6. Procédé selon l'une quelconque des revendications 4 ou 5, **caractérisé en ce que** l'émulsion aqueuse contient 1 à 50 % en poids de nanoparticules, par rapport à la teneur en solides de l'émulsion.

7. Utilisation du matériau à base de fibres de carbone revêtu avec des nanoparticules selon l'une quelconque des revendications 1 à 3, de préférence fabriqué par un procédé selon l'une quelconque des revendications 4 à 6, pour la fabrication de matériaux composites à base de fibres de carbone.

8. Matériau composite à base de fibres de carbone, contenant le matériau à base de fibres de carbone revêtu avec des nanoparticules selon l'une quelconque des revendications 1 à 3, de préférence fabriqué par un procédé selon l'une quelconque des revendications 4 à 7, dans une matrice polymère.

9. Matériau composite à base de fibres de carbone selon la revendication 8, **caractérisé en ce que** la matrice polymère est un duromère.

10. Matériau composite à base de fibres de carbone selon l'une quelconque des revendications 8 ou 9, **caractérisé en ce que** le duromère est une résine époxyde.
